# EUROPÄISCHE PATENTANMELDUNG

(11) **EP 0 663 373 A1**
(43) Veröffentlichungstag der Anmeldung: **19.07.1995**
(21) Anmeldenummer: 95100195.7
(22) Anmeldetag: 09.01.1995
(51) Int. Cl.: C04B 16/06, C08J 5/06, D01F 6/80, D06M 11/00, D06M 15/00

(54) **Bündel aus Stapelfasern aus aromatischen Polyamiden mit verbesserter Dispergierbarkeit in viskosen Matrizes, und Verfahren zur Herstellung von Faserverstärkten Verbunden**

(30) Priorität: 18.01.1994 DE 4401233
(71) Anmelder: HOECHST AKTIENGESELLSCHAFT, D-65929 Frankfurt am Main (DE)
(72) Erfinder: Neuert, Richard, Dr., D-90610 Winkelhaid (DE); Stein, Gerhard, D-93309 Kelheim (DE)

(57) **Zusammenfassung**

Beschrieben werden Bündel aus Stapelfasern aus aromatischen Polyamiden mit einer Stapellänge von mindestens 1 mm, welche mit einer wirksamen Menge eines den Zusammenhalt des Faserbündels erhöhenden Mittels versehen sind.

Die Stapelfaserbündel werden vor dem Einmischen in ein Matrixmaterial durch das Klebmittel zusammengehalten und lösen sich beim Einmischen in das Matrixmaterial auf. Dabei kann mit üblichen Mischaggregaten gearbeitet werden.

## Beschreibung

Die vorliegende Erfindung betrifft Bündel aus Stapelfasern aus aromatischen Polyamiden (im folgenden auch Aramide genannt), sowie ein Verfahren zur Herstellung von faserverstärkten Verbunden.

Es ist bekannt, daß beim Einmischen synthetischer Kurzfasern in viskose Matizes, wie in Beton- oder Mörtel, Probleme auftreten. In Abwesenheit spezieller Maßnahmen bilden sich üblicherweise sogenannte "Batzen" oder "Igel" aus, d.h. die Faserbündel lösen sich nicht oder nicht genügend auf und verbleiben in der Matrix und somit im später daraus hergestellten Verbundwerkstoff. Die nicht aufgelösten Faserbündel sind im allgemeinen nicht erwünscht, da daraus Schwachstellen im Verbundwerkstoff resultieren.

Es sind bereits verschiedene Wege beschritten worden, um die Auflösung von Faserbündeln beim Einmischen in solche Matrizes zu verbessern. So lassen sich besondere Mischaggregate einsetzen; diese Lösung ist häufig mit hohem apparativem und zeitlichem Aufwand verbunden und dementsprechend kostenintensiv.

Es ist auch bereits bekannt, die Faserbündel mit einem Klebmittel zu beaufschlagen, welches vor dem Einmischen einen Zusammenhalt des Bündels bewirkt und beim Einmischen unter Zuhilfenahme üblicher Mischaggregate eine Auflösung der Bündel gestattet. So werden in der EP-A-235,577 Acrylfaserbündel beschrieben, die ein solches Eigenschaftprofil aufweisen. Derart behandelte Bündel aus Stapelfasern aus Aramiden sind bislang nicht bekannt geworden.

Es wurde jetzt gefunden, daß die Behandlung von Stapelfasern bestimmter Stapellänge mit einem Klebmittel zu Faserbündeln führt, die das oben beschriebene gewünschte Eigenschaftsprofil aufweisen. Die erfindungsgemäßen Faserbündeln lassen sich mit konventionellen Mischern besonders gut in viskose Matrices einmischen und dabei in Einzelfasern vereinzeln.

Die vorliegende Erfindung betrifft ein Bündel aus Stapelfasern aus aromatischen Polyamiden mit einer Stapellänge von mindestens 1 mm, welche mit einer wirksamen Menge eines den Zusammenhalt des Faserbündels erhöhenden Mittels versehen sind.

Bei den erfindungsgemäß einzusetzenden Aramidfasern kann es sich um Fasern aus beliebigen aromatischen Polyamiden handeln. Dabei kann es sich um Homopolymere oder vorzugsweise um Copolymere handeln.

Beispiele für Homopolymere sind Poly-(para-phenylen-terephthalamid) oder Poly-(metaphenylen-isophthalamid).

Vorzugsweise bestehen die einzusetzenden Fasern aus aromatischen Polyamiden, insbesondere aromatischen Copolyamiden, die in organischen polaren aprotischen Lösungsmitteln löslich sind.

Unter löslichem aromatischen Polyamid ist im Rahmen dieser Erfindung ein aromatisches Polyamid zu verstehen, daß bei 25°C eine Löslichkeit in N-Methylpyrrolidon von mindestens 50 g/l aufweist.

Vorzugsweise enthält das polare aprotische organische Lösungsmittel zumindest ein Lösungsmittel vom Amidtyp, wie z.B. N-Methyl-2-pyrrolidon, N,N-Dimethylacetamid, Tetramethylharnstoff, N-Methyl-2-piperidon, N,N'-Dimethylethylenharnstoff, N,N,N',N'-Tetramethylmaleinsäureamid, N-Methylcaprolactam, N-Acetylpyrrolidin, N,N-Diethylacetamid, N-Ethyl-2-pyrrolidon, N,N'-Dimethylpropionsäureamid, N,N-Dimethylisobutylamid, N-Methylformamid, N,N'-Dimethylpropylenharnstoff. Für das erfindungsgemäße Verfahren sind die bevorzugten organischen Lösungsmittel N-Methyl-2-pyrrolidon, N,N-Dimethylacetamid und eine Mischung dieser Verbindungen.

Bevorzugt setzt man Fasern aus aromatischen Copolyamiden ein, die in polaren aprotischen organischen Lösungsmitteln unter der Ausbildung isotroper Lösungen löslich sind und die mindestens zwei, insbesondere drei verschiedene sich in den Diamineinheiten unterscheidende wiederkehrende Struktureinheiten aufweisen.

Vorzugsweise handelt es sich dabei um ein Polymeres, das die wiederkehrenden Struktureinheiten der Formeln I, II und gegebenenfalls III aufweist

-OC-Ar¹-CO-NH-Ar²-NH- (I),

-OC-Ar¹-CO-NH-Ar³-NH- (II),

-OC-Ar¹-CO-NH-Ar⁴-NH- (III),

worin Ar¹, Ar², Ar³ und Ar⁴ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und
Ar², Ar³ und gegbenenfalls Ar⁴ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und isotrope Lösungen bildendes aromatisches Polyamid ergibt.

Bedeuten irgendwelche Reste zweiwertige aromatische Reste, deren Valenzbindungen sich in para- oder in vergleichbarer koaxialer oder paralleler Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über -CO-NH- Gruppen linear miteinander verbunden sein.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallel, entgegegesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C Bindung verknüpfte aromatische Reste mit koaxialen, entgegengesetzt gerichteten Bindungen, insbesondere 4,4'-Biphenylen.

Bedeuten irgendwelche Reste zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brückengruppen, wie z.B. -O-, -CH₂-, -S-, -CO- oder - SO₂- miteinander verbunden sein.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Geringere Anteile, beispielsweise bis zu 5 Mol % der Monomereinheiten, bezogen auf das Polymere, können aliphatischer oder cycloaliphatischer Natur sein, beispielsweise Alkylen- oder Cycloalkyleneinheiten darstellen.

Unter Alkylenresten ist verzweigtes und insbesondere geradkettiges Alkylen zu verstehen, beispielsweise Alkylen mit zwei bis vier Kohlenstoffatomen, insbesondere Ethylen.

Unter Cycloalkylenresten sind beispielsweise Reste mit fünf bis acht Kohlenstoffatomen zu verstehen, insbesondere Cycloalkylen.

Alle diese aliphatischen, cycloaliphatischen oder aromatischen Reste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, wie Ethyl, n-Propyl, n-Butyl, n-Pentyl oder n-Hexyl und insbesondere Methyl.

Unter Alkoxyresten ist verzweigtes und insbesondere geradkettiges Alkoxy zu verstehen, beispielsweise Alkoxy mit ein bis sechs Kohlenstoffatomen, wie Ethoxy, n-Propoxy, n-Butoxy, n-Pentoxy oder n-Hexoxy und insbesondere Methoxy.

Bedeuten irgendwelche Reste Halogen, so handelt es sich dabei beispielsweise um Fluor, Brom oder insbesondere um Chlor.

Bevorzugt verwendet aromatische Polyamide auf der Basis von unsubstituierten Resten.

Als Dicarbonsäureeinheit in den aromatischen Polyamiden enthaltend die wiederkehrenden Struktureinheiten der Formeln I, II und gegebenenfalls III setzt man vorzugsweise Terephthalsäureeinheiten ein.

Beispiele für bevorzugte Diaminkombinationen, die diesen bevorzugten wiederkehrenden Struktureinheiten der Formeln I, II, und III zugrundeliegen, sind 1,4-Phenylendiamin, 4,4'-Diaminodiphenylmethan und 3,3'-Dichlor-, 3,3'-Dimethyl- oder 3,3'-Dimethoxybenzidin; sowie 1,4-Phenylendiamin, 1,4-Bis-(aminophenoxy)-benzol und 3,3'-Dichlor-, 3,3'-Dimethyl- oder 3,3'-Dimethoxybenzidin; sowie 1,4-Phenylendiamin, 3,4'-Diaminodiphenylether und 3,3'-Dichlor-, 3,3'-Dimethyl- oder 3,3'-Dimethoxybenzidin; sowie 1,4-Phenylendiamin, 3,4'-Diaminodiphenylether und 4,4'-Diaminobenzanilid; sowie 1,4-Phenylendiamin, 1,4-Bis-(aminophenoxy)-benzol und 3,4'-Diaminodiphenylether.

Aramide, die sich von solchen Diaminkombinationen ableiten und die sich bevorzugt gemäß der vorliegenden Erfindung einsetzen lassen, sind in den EP-A-199,090, EP-A-364,891, EP-A-364,892, EP-A-364,893 und EP-A-424,860 beschrieben. Dort ist ferner deren Verarbeitung zu Filamenten beschrieben.

Die erfindungsgemäß einzusetzenden aromatischen Polyamide sind an sich bekannt und können mittels an sich bekannter Verfahren hergestellt werden.

Bevorzugt setzt man aromatische Polyamide ein, die die oben definierten wiederkehrenden Struktureinheiten der Formeln I, II und gegebenenfalls III aufweisen, worin Ar¹ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden, Ar² einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, Ar³ einen Rest der Formel IV darstellt

-Ar⁵-X-Ar⁶- (IV),

worin Ar⁵ und Ar⁶ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin Ar⁶ zusätzlich einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden,
X eine Gruppe der Formel -O-, -S-, -SO₂-, -O-Phenylen-O- oder Alkylen ist, und worin
Ar⁴ eine der für Ar² oder Ar³ definierten Bedeutungen annimmt aber von dem jeweils gewählten Rest Ar² oder Ar³ eines Moleküls abweicht.

Besonders bevorzugte Aramide dieses Typs sind Polymere, worin Ar¹ 1,4-Phenylen ist, Ar² 1,4-Phenylen oder ein zweiwertiger Rest des 4,4'-Diaminobenzanilids ist, Ar⁵ und Ar⁶ 1,4-Phenylen darstellen, X -O-, -CH₂- oder -O-1,4-Phenylen-O- ist und Ar⁴ einen zweiwertigen Rest des 3,4-Diaminodiphenylethers, 3,3'-Dichlorbenzidins, des 3,3'-Dimethylbenzidins oder des 3,3'-Dimethoxybenzidins darstellt.

Die erfindungsgemäß zu verwendenden Stapelfasern können nach an sich bekannten Verfahren, beispielsweise nach dem Naßspinnverfahren erhalten werden. Die Erzeugung der erfindungsgemäß einzusetzenden Stapelfasern kann in an sich bekannter Weise durch Zerschneiden von Filamenten auf bekannten Schneidevorrichtungen erfolgen.

Versuche haben ergeben, daß die Stapelfasern eine Mindeststapellänge von 1 mm aufweisen müssen, um das gewünschte Eigenschaftsprofil zu ergeben.

Üblicherweise weisen die erfindungsgemäß einzusetzenden Fasern eine Stapellänge von 1 bis 48 mm, vorzugsweise von 3 bis 16 mm, insbesondere von 3 bis 10 mm, auf.

Ihr Einzelfasertiter beträgt üblicherweise mehr als 1,0 dtex, vorzugsweise 1,5 bis 20 dtex.

Der Faserquerschnitt der erfindungsgemäß einzusetzenden Aramidfasern kann beliebig sein, beispielsweise dreieckig, tri- oder multilobal oder insbesondere rund.

Bei den erfindungsgemäß einzusetzenden Aramidfasern handelt es sich üblicherweise um hochfeste Typen. Solche Fasern weisen im allgemeinen eine Höchstzugkraft (gemessen nach DIN 53816) von mehr als 100 cN/tex, vorzugsweise von 140 bis 290 cN/tex auf. In Abhängigkeit vom Titer können auch höhere Höchstzugkraftwerte auftreten.

Besonders bevorzugt setzt man hochfeste und hochmodulige Aramidfasertypen ein; beispielsweise Fasern mit einer Festigkeit von 140 bis 290 cN/tex und einem Anfangsmodul (gemessen nach DIN 53816), bezogen auf 100 % Dehnung, von mehr als 25 N/tex, vorzugsweise von 40 bis 130 N/tex.

Solche Fasertypen weisen vorzugsweise Höchstzugkraftdehnungen (gemessen nach DIN 53816) von 0,5 bis 10 %, insbesondere von 2 bis 6 % auf.

Das den Zusammenhalt des Faserbündels erhöhende Mittel wird üblicherweise in einer Menge von 0,1 bis 5,0 Gew. % auf die Fasern aufgebracht. Bevorzugte Mengen dieses Mittels liegen im Bereich von 0,3 bis 3,0 Gew.%, bezogen auf das Faserbündel. Besonders bevorzugt setzt man 0,5 bis 3,0 Gew.% des Mittels ein.

Das erfindungsgemäß einzusetzende Mittel ist hinsichtlich seiner chemischen Zusammensetzung keinen Beschränkungen unterworfen. Es kann sich dabei um Einzelkomponenten oder Kombinationen von Präparationen handeln, welche die erfindungsgemäße Bündelung von Einzelkapillaren zur Verbesserung der Eimischbarkeit gewhärleistet.

Beispiele für einen Typ geeigneter Präparationen sind Mittel, die in Wasser löslich oder quellbar sind. Beispiele dafür sind modifizierte Cellulosederivate, wie Carboxy-Methylcellulose; oder wasserlösliche Alkalisilikate, wie Natronwasserglas; oder wasserlösliche Polymere, wie Polyvinylalkohol; oder wasseremulgierbare Präparationen, wie Talgfettderivate, insbesondere Talgfettalkoholtriphosphate.

Beispiele für einen weiteren Typ geeigneter Präparationen sind Mittel, die in organischen Lösungsmitteln löslich sind. Beispiele dafür sind Polyurethan-Harze oder Organosilan-Haftvermittler

Diese Typen von Klebmitteln sind an sich bekannt und beispielsweise in Ullmanns Encyclopädie der technischen Chemie, 4. neubearbeitete und erweiterte Auflage, Band 21, S. 409-414 und S. 496-500, Verlag Chemie (1980), beschrieben

Als wasserlösliches Alkalisilikat setzt man besonders bevorzugt ein Natriumsilikat ein, das üblicherweise 2 bis 4 Mol SiO₂ auf 1 Mol Alkalioxid aufweist.

Als Organosilan-Haftvermittler setzt man bevorzugt eine Verbindung der Formel I ein

X-(CH₂)ₙ-Si-(Y)₃ (I),

worin n eine ganze Zahl von 1 bis 5, insbesondere 3 bedeutet, X ein Gruppe der Formel -COOR¹, -CN, -(CH₂)ₘ-NR²R³ oder Halogen ist, Y Alkyl, Alkoxy oder Halogen bedeutet, R¹, R² und R³ unabhängig voneinander Wasserstoff, Alkyl, Cycloalkyl, Aryl oder Aralkyl bedeuten und m eine ganze Zahl von 0 bis 5, insbesondere 2 bedeutet.

Besonders bevorzugt behandelt man Acrylfasern mit Organosilan-Haftvermittlern der oben definierten Formel I, worin X eine Gruppe der Formel -(CH₂)ₘ-NR²R³ ist, worin R² und R³ unabhängig voneinander Wasserstoff oder C₁-C₆Alkyl bedeuten, Y C₁-C₆Alkyl oder insbesondere C₁-C₆Alkoxy bedeuten und m 0 oder 2 ist.

Bedeuten irgendwelche Gruppen Alkyl, so handelt es sich dabei im allgemeinen um die weiter oben beschriebenen verzweigten oder insbesondere geradkettigen Alkylreste. Bevorzugt wird Methyl.

Bedeuten irgendwelche Gruppen Alkoxy, so handelt es sich dabei im allgemeinen um die weiter oben beschriebenen verzweigten oder insbesondere geradkettigen Alkoxyreste. Bevorzugt wird Methoxy.

Bedeuten irgendwelche Gruppen Cycloalkyl, so handelt es sich dabei im allgemeinen um Reste mit fünf bis acht Ringkohlenstoffatomen, insbesondere um Cyclohexyl.

Bedeuten irgendwelche Gruppen Aryl, so handelt es sich dabei im allgemeinen um ein- oder mehrkernige carbocyclisch-aromatische Reste, die kondensiert oder anelliert sein können, insbesondere um Phenyl.

Bedeuten irgendwelche Gruppen Aralkyl, so handelt es sich dabei üblicherweise um Reste mit sieben bis neun Kohlenstoffatomen, insbesondere um Benzyl.

Bedeuten irgenwelche Reste Halogen, so handelt es sich dabei im allgemeinen um die weiter oben beschriebenen Halogenreste; bevorzugt wird Chlor.

Die erfindungsgemäßen Faserbündel werden vorzugsweise zur Herstellung von Verbundwerkstoffen eingesetzt. Das Verfahren zur Herstellung dieser Verbundwerkstoffe umfasst die Schritte
a) Vorlegen eines viskosen Matrixmaterials, vorzugsweise eines feinteiligen in trockener oder feuchter Form vorliegenden Matrixmaterials, in einem Mischaggregat,
b) Zufügen einer wirksamen Menge eines Verstärkungsmaterials in Form der weiter oben definierten Bündel aus Stapelfasern, und
c) Einmischen des Verstärkungsmaterials in das Matrixmaterial.

Gegenstand der Erfindung ist auch die Verwendung der erfindungsgemäßen Stapelfaserbündel im oben definierten Verfahren.

Die erfindungsgemäßen Stapelfaserbündel können in Mischung mit anorganischen und/oder organischen viskosen Matrixmaterialien eingesetzt werden.

Unter dem Begriff "viskoses Matrixmaterial" sind im Rahmen der Beschreibung solche Materialien zu verstehen, deren Viskosität so hoch ist, daß bei der Verwendung üblicher Kurzschnittfasern und bei der Verwendung konventioneller Mischaggregate mit einer beträchtlichen Batzenbildung in der Mischung zu rechnen ist.

Beispiele für organische Matrixmaterialien sind viskose Kunststoffe, also erhitzte Thermoplaste oder Duroplaste, in die die erfindungsgemäßen Stapelfaserbündel eingemischt und möglichst gleichmäßig verteilt werden sollen.

Beispiele für anorganische Matrixmaterialien sind an der Luft und/oder durch Wasser abbindende Mischungen anorganischer Materialien; insbesondere hydraulisch abbindende Materialien. Die erfindungsgemäßen Faserbündel werden bevorzugt in Mischung mit Mörtel, Beton, Zement, Gips oder organischen Versiegelungsmitteln - also in Baustoffmitteln im weitesten Sinne - eingesetzt.

Die Erfindung betrifft auch die Verwendung der Bündel aus Stapelfasern für diese Zwecke.

Das Einmischen der erfindungsgemäßen Stapelfaserbündel in das Matrixmaterial kann mit konventionellen Mischaggregaten erfolgen. Beispiele dafür sind praxisübliche Zwangs-, Pflugschar- und andere derartige Mischer.

Das Matrixmaterial kann feinteilig, wie in Form von Granulat, von Pulver oder von Staub, sowie als viskose Schmelze vorliegen. Vorzugsweise liegt es als feinteiliges anorganisches Material vor. Das Einmischen der Stapelfaserbündel in feinteiliges anorganisches Material kann in trockenem oder in feuchtem Zustand erfolgen.

In einer weiteren bevorzugten Ausführungsform werden die erfindungsgemäßen Aramid-Stapelfaserbündelin Matrixmaterialien eingemischt, die in Spritzgieß- und Extrusionsverfahren zur Anwendung kommen.

## Patentansprüche

1. Bündel aus Stapelfasern aus aromatischen Polyamiden mit einer Stapellänge von mindestens 1 mm, welche mit einer wirksamen Menge eines den Zusammenhalt des Faserbündels erhöhenden Mittels versehen sind.

2. Bündel aus Stapelfasern nach Anspruch 1, dadurch gekennzeichnet, daß es sich bei dem aromatischen Polyamid um Poly-(para-phenylen-terephthalamid) oder um Poly-(meta-phenylen-isophthalamid) handelt.

3. Bündel aus Stapelfasern nach Anspruch 1, dadurch gekennzeichnet, daß es sich bei dem aromatischen Polyamid um ein aromatisches Copolyamid handelt, das in organischen polaren aprotischen Lösungsmitteln löslich ist.

4. Bündel aus Stapelfasern nach Anspruch 3, dadurch gekennzeichnet, daß es sich bei dem aromatischen Copolyamid um ein Polymeres handelt, das die wiederkehrenden Struktureinheiten der Formeln I, II und gegebenenfalls III aufweist
-OC-Ar¹-CO-NH-Ar²-NH- (I),
-OC-Ar¹-CO-NH-Ar³-NH- (II),
-OC-Ar¹-CO-NH-Ar⁴-NH- (III),
worin Ar¹, Ar², Ar³ und Ar⁴ unabhängig voneinander einen zweiwertigen ein- oder mehrkernigen aromatischen Rest darstellen, dessen freie Valenzen sich in para-Stellung oder in meta-Stellung oder in einer zu diesen Stellungen vergleichbaren parallelen, koaxialen oder gewinkelten Stellung zueinander befinden, und
Ar², Ar³ und gegbenenfalls Ar⁴ im Einzelfall jeweils unterschiedliche im Rahmen der gegebenen Definitionen liegende Bedeutungen annehmen, und wobei die jeweiligen dem Polymeren zugrundeliegenden Monomerbausteine so ausgewählt werden, daß sich ein in organischen Lösungsmitteln lösliches und isotrope Lösungen bildendes aromatisches Polyamid ergibt.

5. Bündel aus Stapelfasern nach Anspruch 4, dadurch gekennzeichnet, daß Ar¹ einen zweiwertigen ein- oder mehrkernigen aromatischen Rest darstellt, dessen freie Valenzen sich in para-Stellung oder in einer zu dieser Stellung vergleichbaren parallelen oder koaxialen Stellung zueinander befinden, Ar² einen zweiwertigen ein- oder mehrkernigen aromatischen Rest darstellt, dessen freie Valenzen sich in p-Stellung oder in einer zu dieser Stellung vergleichbaren parallelen oder koaxialen Stellung zueinander befinden, Ar³ einen Rest der Formel IV darstellt
-Ar⁵-X-Ar⁶- (IV),
worin Ar⁵ und Ar⁶ unabhängig voneinander einen zweiwertigen ein- oder mehrkernigen aromatischen Rest darstellen, dessen freie Valenzen sich in para-Stellung oder in einer zu dieser Stellung vergleichbaren parallelen oder koaxialen Stellung zueinander befinden, oder worin Ar⁶ zusätzlich einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden,
X eine Gruppe der Formel -O-, -S-, -SO₂-, -O-Phenylen-O- oder Alkylen ist, und worin Ar⁴ eine der für Ar² oder Ar³ definierten Bedeutungen annimmt aber von dem jeweils gewählten Rest Ar² oder Ar³ eines Moleküls abweicht.

6. Bündel aus Stapelfasern nach Anspruch 5, dadurch gekennzeichnet, daß Ar¹ 1,4-Phenylen ist, Ar² 1,4-Phenylen oder ein zweiwertiger Rest des 4,4'-Diaminobenzanilids ist, Ar⁵ und Ar⁶ 1,4-Phenylen darstellen, X -O-, -CH₂- oder - O-1,4-Phenylen-O- ist und Ar⁴ einen zweiwertigen Rest des 3,4'-Diaminodiphenylethers, 3,3'-Dichlorbenzidins, des 3,3'-Dimethylbenzidins oder des 3,3'-Dimethoxybenzidins darstellt.

7. Bündel aus Stapelfasern nach Anspruch 1, dadurch gekennzeichnet, daß die Stapelfasern eine Stapellänge von 3 bis 16 mm, insbesondere von 3 bis 10 mm, aufweisen.

8. Bündel aus Stapelfasern nach Anspruch 1, dadurch gekennzeichnet, daß die Stapelfasern einen Einzelfasertiter von 1,5 bis 20 dtex aufweisen.

9. Bündel aus Stapelfasern nach Anspruch 1, dadurch gekennzeichnet, daß die Menge des den Zusammenhalt des Faserbündels erhöhenden Mittel auf den Fasern 0,3 bis 3,0 Gew.%, bevorzugt 0,5 bis 3,0 Gew.%, betragt.

10. Bündel aus Stapelfasern nach Anspruch 1, dadurch gekennzeichnet, daß es sich bei dem den Zusammenhalt des Faserbündels erhöhenden Mittel um ein modifiziertes Cellulosederivat, insbesondere Carboxy-Methylcellulose; oder um ein wasserlösliches Alkalisilikat, insbesondere Natromwasserglas; oder um ein wasserlösliches Polymeres, insbesondere Polyvinylalkohol; oder um eine wasseremulgierbare Präparation, wie Talgfettderivate, insbesodnere Talgfettalkoholtriphosphate handelt.

11. Bündel aus Stapelfasern nach Anspruch 1, dadurch gekennzeichnet, daß es sich bei dem den Zusammenhalt des Faserbündels erhöhenden Mittel um ein in organischen Lösungsmitteln lösliches Polyurethan-Harz; oder um einen Organosilan-Haftvermittler handelt.

12. Bündel aus Stapelfasern nach Anspruch 10, dadurch gekennzeichnet, daß es sich bei dem wasserlöslichen Alkalisilikat ein Natriumsilikat handelt, das 2 bis 4 Mol SiO₂ auf 1 Mol Alkalioxid aufweist.

13. Bundel aus Stapelfasern nach Anspruch 11, dadurch gekennzeichnet, daß es sich bei dem Organosilan-Haftvermitter um eine Verbindung der Formel I handelt
X-(CH₂)ₙ-Si-(Y)₃ (I),
worin n eine ganze Zahl von 1 bis 5, insbesondere 3 bedeutet, X ein Gruppe der Formel -COOR¹, -CN, -(CH₂)ₘ-NR²R³ oder Halogen ist, Y Alkyl, Alkoxy oder Halogen bedeutet, R¹, R² und R³ unabhängig voneinander Wasserstoff, Alkyl, Cycloalkyl, Aryl oder Aralkyl bedeuten und m eine ganze Zahl von 0 bis 5, insbesondere 2 bedeutet.

14. Verfahren zur Herstellung von Verbundwerkstoffen umfassend die Schritte:
a) Vorlegen eines viskosen Matrixmaterials, vorzugsweise eines feinteiligen in trockener oder feuchter Form vorliegenden Matrixmaterials, in einem Mischaggregat,
b) Zufügen einer wirksamen Menge eines Verstärkungsmaterials in Form der Bündel aus Stapelfasern nach Anspruch 1, und
c) Einmischen des Verstärkungsmaterials in das Matrixmaterial.

15. Verfahren nach Anspruch 14, dadurch gekennzeichnet, daß es sich bei dem viskosen Matrixmaterial um erhitzte Thermoplaste oder Duroplaste handelt.

16. Verfahren nach Anspurch 14, dadurch gekennzeichnet, daß es sich bei dem viskosen Matrixmaterial um an der Luft und/oder durch Wasser abbindende Mischungen anorganischer Materialien handelt, insbesondere um hydraulisch abbindende Materialien.

17. Verwendung der Bündel aus Stapelfasern nach Anspruch 1 in Baustoffmitteln.
